# EUROPEAN PATENT SPECIFICATION

(11) **EP 2 012 088 B1**
(45) Date of publication and mention of the grant of the patent: **06.05.2015**
(21) Application number: 08011549.6
(22) Date of filing: 25.06.2008
(51) Int. Cl.: G01C 21/36, G01C 21/32, G06T 7/00, G06K 9/00, G01C 21/26

(54) **Road information generating apparatus, road information generating method and road information generating program**
Vorrichtung zur Erzeugung von Straßeninformationen, Verfahren zur Erzeugung von Straßeninformationen und Programm zur Erzeugung von Straßeninformationen
Appareil de génération d'informations routières, procédé de génération d'informations routières et programme de génération d'informations routières

(30) Priority: 05.07.2007 JP 2007177758
(43) Date of publication of application: 07.01.2009
(73) Proprietor: Aisin AW Co., Ltd., Fujii-cho Anjo-shi, Aichi 444-1192 (JP)
(72) Inventor: Miyazaki, Hideto, Okazaki-shi, Aichi 444-8564 (JP)
(74) Representative: Kramer Barske Schmidtchen Patentanwälte PartG mbB

(56) References cited:
- JP-A- 2000 230 834
- US-A- 5 922 036
- US-A1- 2001 056 326
- US-A1- 2003 103 650
- US-A1- 2005 283 699
- US-B1- 6 385 539
- US-B1- 6 526 352
- US-B1- 6 577 334

## Description

### BACKGROUND OF THE INVENTION

### 1. Field of the Invention

The present invention relates to road information generating apparatuses, methods, and programs that generate information related to roads.

### 2. Description of the Related Art

Conventionally, an art is known in which, when updating the map information that is used by a navigation apparatus, new road information is generated based on the travel history of the vehicle, or it is determined whether or not the travel position of the vehicle matches a position where the vehicle traveled in the past based on the travel history, and in the case in which the position does not match, it is determined that the vehicle is traveling along a new lane, and supplementary lane information is registered (refer, for example, to Japanese Patent Publication JP-A-2004-251790).

### SUMMARY OF THE INVENTION

In the conventional art, it is difficult to identify each lane in a road that has a plurality of lanes and generate lane information accurately.
Specifically, in the art that is disclosed in Japanese Patent Publication JP-A-2004-251790, lane information is generated by comparing the past travel paths of the vehicle and the present travel path of the vehicle. In such a structure, it is difficult to identify a plurality of lanes that is aligned in a narrow segment accurately. For example, there can be cases in which a plurality of travel paths are recorded in one lane. Therefore, this may cause the inconvenience that a lane may be identified as a different lane even though it is originally the same lane, or a lane may be identified as the same lane even though it is originally a different lane.

US 6 577 334 B1 relates in general to vehicle control. More particularly, indicator lines on a road, such as lane dividing lines, are detected and analyzed to collect information from which a current vehicle position is determined and parameters are developed to be considered in vehicle control.

US 6 526 352 B1 relates to methods for mapping a road in which a vehicle-mounted arrangement is used and the vehicle-mounted arrangement.

US 5 922 036 relates to a first lane detection sensor for detecting opposite lane markers of a road, in which the lane markers are preliminarily obtained as a plurality of spline curves and points in Hough space are obtained by using coefficients of the spline curves corresponding to the lane markers so as to obtain the lane markers at high speed, a second lane detection sensor for detecting opposite lane markers of a road, in which the lane markers are detected by using a low-resolution image from a high-definition image so as to detect curves of the lane markers smoothly, a third lane detection sensor for detecting opposite lane markers of a road, in which shapes of curves of the lane marker ahead of a running motor vehicle are forecast by using a map data base, an arithmetic unit for approximating a radius of curvature of a road from an angle formed between two tangents for the lane markers, a first navigation system for storing data of a road on which a motor vehicle has run and a second navigation system for guiding a driver from a lane on which his motor vehicle is running and position of the lane.

JP 2000-230834 discloses an updating equipment of road map information and a control method of the same.

In consideration of the problems described above, it is an object of the present invention to generate lane information accurately by identifying each of the lanes in a road that has a plurality of lanes.

This object is achieved by the road information generating apparatus according to claim 1, the road information generating method according to claim 3, and the road information generating program according to claim 5. The other claims relate to further developments.

In order to attain the object described above, in the present invention, a host vehicle travel lane along which a host vehicle is traveling is detected based on image information that includes a road along which the vehicle was traveling, lane information is generated that indicates a position of the host vehicle travel lane, and the lane information is registered on a storage medium. Specifically, because the host vehicle travel lane along which the host vehicle is traveling is detected based on an image that includes the road along which the vehicle is traveling, it is possible to specify the host vehicle travel lane while identifying the appearance of the actual travel lane. Therefore, the host vehicle travel lane can be accurately specified, and the position thereof can be registered.

Here, provided that it is possible to acquire host vehicle position information that indicates a position of a host vehicle, various structures can be used for the host vehicle position information acquiring unit in order to acquire the information that indicates the position of the host vehicle. For example, a structure can be used that specifies the position of the host vehicle by using a sensor or a camera, or a structure can be used that acquires the host vehicle position information by using the path of the host vehicle based on a signal from a GPS or a map, communication between vehicles, or road-to-vehicle communication or the like.

Provided that an image can be acquired that includes a road along which the vehicle is traveling and the host vehicle travel lane can be detected based on this image, various structures can be used for the image information acquiring unit. For example, a structure can be used in which the vicinity of the vehicle is photographed by a camera that is mounted on the host vehicle. Note that according to a structure that acquires an image in which the road has been photographed by a camera that is mounted on the host vehicle, it is possible to specify the relationship between the position of the road in the image and the host vehicle extremely easily, and it is possible to specify the host vehicle travel lane by using a simple structure.

The host vehicle travel lane detecting unit is only required to be able to detect the host vehicle travel lane based on the image information, the host vehicle travel lane detecting unit can detect the host vehicle travel lane along which the host vehicle is traveling based on various characteristic quantities in the image. Specifically, the lane in the road can be specified based on various features on the road and the lane can be detected by using an image that corresponds to these various features.

Thus, if the image that corresponds to this feature is detected, it is possible to specify the relationship between the position of the lane on the road along which the host vehicle is traveling and the position of the host vehicle, and thereby it is possible to detect the host vehicle travel lane on which the host vehicle is traveling from among a plurality of lanes or a single lane. Note that examples of features for specifying the host vehicle travel lane include all features that reflect the characteristics of the lane. Examples include the line that shows the boundaries between the lanes, the center divider, the shoulder, road markings in the lane, and structures and the like.

The lane information registering unit should be able to generate lane information that indicates the position of the host vehicle travel lane, and to register this information on a storage medium. Specifically, the position of the host vehicle travel lane can be specified by a reference position in the lane (for example, the center point in the transverse direction or the endpoint in the transverse direction). Thus, if the position of the host vehicle is specified, it is possible to specify the position of the host vehicle travel lane by using the relationship between the host vehicle and the host vehicle travel lane. Of course, it is possible to specify the position of the host vehicle travel lane by using the reference position described above in the lane information. However, not just one position is registered as lane information for a lane, but preferably a plurality of positions are discretely registered in the direction in which the host vehicle travel lane extends.

Furthermore, when generating lane information that indicates the position of the host vehicle travel lane, a structure may be used that specifies the relationships with other lanes. Specifically, in a road that has a plurality of lanes, it is convenient to carry out guidance and control based on the relationships between the host vehicle travel lane and other lanes. Thus, in a road that has a plurality of lanes, if the host vehicle travel lane and the other lanes are detected, and lane information that indicates the position of the host vehicle travel lane along with the relationships between this host vehicle travel lane and the other lanes is generated, then it is possible to generate lane information that can recognize the relationships between lanes along with the position of each of the lanes.

As a result, it is possible to recognize the relationships between the lanes based on this lane information and it is possible to carry out guidance and control and the like that use the relationships between the lanes. For example, in a navigation apparatus that uses the lane information that has been registered on a storage medium, it is possible to specify the lane on which the host vehicle is traveling by map matching and the like, to specify accurately the position along which the host vehicle is traveling in the lane, to carry out guidance that differs for each of the lanes, to carry out guidance for changing lanes accurately, to provide guidance about congestion information that differs for each of the lanes, and to carry out a vehicle control according to a curve contour that differs for each of the lanes.

Note that it is possible to use various structures in order to extract the image of the boundaries of the lanes based on the image information, and for example, a characteristic quantity that depends on the boundaries of the lanes may be extracted based on the image information. More specifically, it is possible to specify the boundaries based on various features that depend on the boundaries of the lanes. Examples of these features include lines that show the boundaries of the lanes, the center divider, the shoulder, road markings in the lane, and structures and the like.

Furthermore, information that indicates the relationships between the host vehicle travel lane and the other lanes may be structured such that it is possible to specify the direction of the other lanes when viewed from the host vehicle travel lane based on at least this information. Therefore, for example, it is possible to use a structure that specifies the presence or absence of another lane to the left or right of the host vehicle travel lane, to specify the order of the host vehicle travel lane (for example, information that indicates the number of the lane when counting from the leftmost lane) of the host vehicle travel lane, and specify the relative positions (the left lane, the center lane, the right lane, or the like) at which the host vehicle travel lane is present. In addition, when generating lane information, the lane information is generated as information that indicates the relationships between the host vehicle travel lane and the other lanes, but at the stage that uses the lane information, the lane information is only required to be able to specify the relationships between the lanes irrespective of whether a lane is the host vehicle travel lane.

Furthermore, as an example of a definition related to the position of the host vehicle travel lane, a structure may be used in which the center position of the host vehicle travel lane in the transverse direction is set to the position of the host vehicle travel lane. Specifically, the host vehicle that is traveling along the host vehicle travel lane normally travels at the center or the substantial center of the host vehicle travel lane in the traverse direction, and thus, in this case, it is possible to specify the position of the host vehicle travel lane extremely easily by using the position of the host vehicle as the position of the host vehicle travel lane.

Note that based on the image information, it can easily be determined whether or not the host vehicle is traveling at the center or the substantial center of the host vehicle travel lane in the transverse direction. Specifically, if the relationship between the host vehicle and the host vehicle travel lane is specified based on the image information, it can be easily determined whether or not the host vehicle is traveling along the center or the substantial center of the host vehicle travel lane in the traverse direction.

In addition, even in the case in which the host vehicle that is traveling along the host vehicle travel lane is not traveling along the substantial center of this host vehicle travel lane in the transverse direction, it is possible to specify the center position of the host vehicle travel lane in the transverse direction based on the image information. Specifically, if the relationship between the host vehicle and the host vehicle travel lane is specified based on image information, it is possible to specify the position at which the host vehicle is traveling in the traverse direction of the host vehicle travel lane. Thus, if a deviation between the position at which the host vehicle is traveling and the center position of the host vehicle travel lane in the traverse direction is identified, it is possible to specify the center position of the host vehicle travel lane in the transverse direction by increasing or decreasing the quantity of the deviation from the position of the host vehicle.

Furthermore, a structure may be used in which the lane information for the host vehicle travel lane is generated and registered in the case in which lane information for the host vehicle travel lane has not been registered on the storage medium. In such a structure, it is possible to save resources because there is no excess registering of the same information or redundant execution of processes for generating the same lane information. Note that the registering of lane information for a certain lane may be completed at the point in time at which lane information has been generated one time for each lane or may be completed by being generated a plurality of times. Specifically, it is possible to use a structure in which lane information for a certain lane is generated a plurality of times, the lane information is determined by acquiring statistical values (mean values or the like) for this information, and then this lane information is registered. According to this structure, it is possible to generate and register more accurate lane information.

Furthermore, the process in which the host vehicle travel lane is detected based on the image information and the lane information that indicates the position thereof is generated as in the present invention may be applied in the form of programs and methods. In addition, the road information generating apparatus, the program, and the method that have been described above include various modes: there can be cases in which they are realized as a single road information generating apparatus, and there can be cases in which they are realized by using parts that are shared by each of the portions that are provided in a vehicle. For example, it is possible to provide a navigation apparatus, a method and a program that are provided with a road information generating apparatus as has been described above. In addition, appropriate modifications are possible in which a portion is realized by software and a portion is realized by hardware. Furthermore, the invention is applicable as a recording medium for programs that control the road information generating apparatus. Of course, this recording medium for the software may be a magnetic recording medium or a magneto-optical recording medium, and any type of recording medium that may be developed in the future may be applied completely identically.

### BRIEF DESCRIPTION OF THE DRAWINGS

Fig. 1 is a block diagram of a navigation apparatus that includes a road information generating apparatus;
Fig. 2 is a drawing that shows the state in which a host vehicle that is traveling along a road is viewed from above;
Fig. 3 is a drawing that shows an example of an image that is acquired by a camera;
Fig. 4 is a flowchart for road information generating process;
Fig. 5 is a flowchart for guidance process; and
Fig. 6 is a drawing that shows the state in which a host vehicle that is traveling along a road is viewed from above.

### DETAILED DESCRIPTION OF THE PREFERRED EMBODIMENTS

Here, the embodiments of the present invention will be explained in the following order:
(1) the structure of the navigation apparatus,
(2) the road information generating process,
(3) the guidance process, and
(4) alternative embodiments.

### (1) The structure of the navigation apparatus

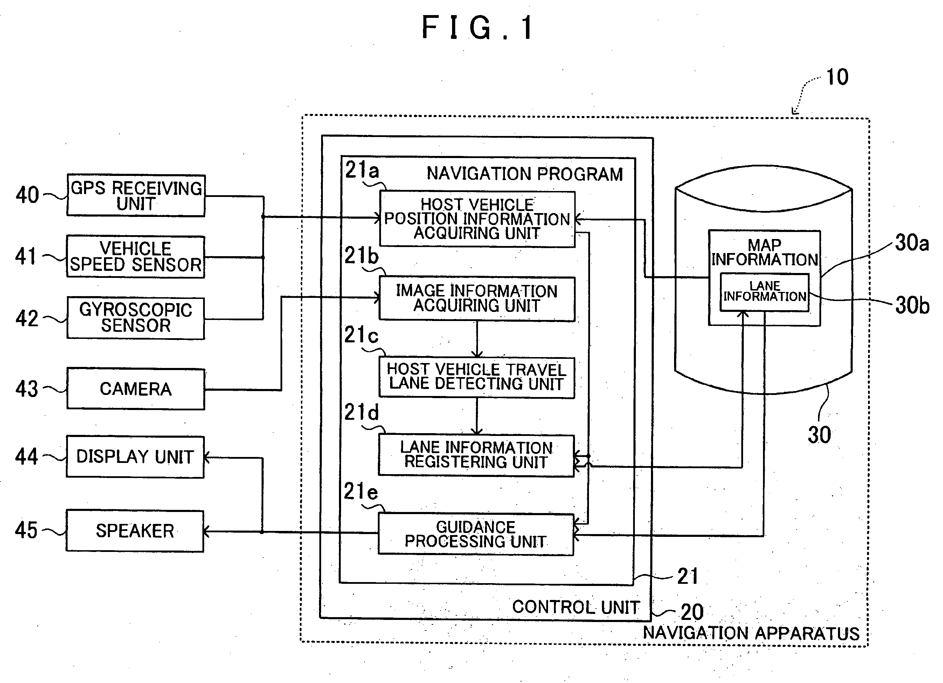

FIG. 1 is a block diagram that shows the structure of a navigation apparatus 10, which includes the road information generating apparatus according to the present invention. The navigation apparatus 10 is provided with a control unit 20 that is provided with CPU, RAM, and ROM and the like, and a storage medium 30. It is possible to execute programs that are stored on the storage medium 30 and the ROM by using the control unit 20. In the present embodiment, a navigation program 21 can be executed as one of these programs, and the navigation program 21 is provided, as one of the functions thereof, with a function that registers lane information that indicates the positions of each of the lanes and the relationships between each of the lanes and a function that carries out guidance based on this lane information.

In a host vehicle (a vehicle on which the navigation apparatus 10 is mounted), a GPS receiving unit 40, a vehicle speed sensor 41, a gyroscopic sensor 42, a camera 43, a display unit 44, and a speaker 45 are provided in order to realize the functions that are carried out by the navigation program 21, and the transfer of signals between each of these units and the control unit 20 is realized by an interface (not illustrated).

The GPS receiving unit 40 receives radio waves from GPS satellites and outputs information for calculating a current position of the host vehicle via an interface (not illustrated). The control unit 20 acquires this signal, and thereby acquires the current position of the host vehicle. The vehicle speed sensor 41 outputs signals that correspond to the rotational speed of the wheels that are provided on the host vehicle. The control unit 20 acquires this signal via an interface (not illustrated), and thereby acquires the speed of the vehicle. The gyroscopic sensor 42 outputs a signal that corresponds to the direction of the host vehicle. The control unit 20 acquires this signal via an interface (not illustrated), and thereby acquires the travel direction of the host vehicle. The vehicle speed sensor 41 and the gyroscopic sensor 42 are used in order to compensate the current position of the host vehicle that has been specified based on the output signal of the GPS receiving unit 40. In addition, the current position of the host vehicle is appropriately compensated based on the travel path of this host vehicle.

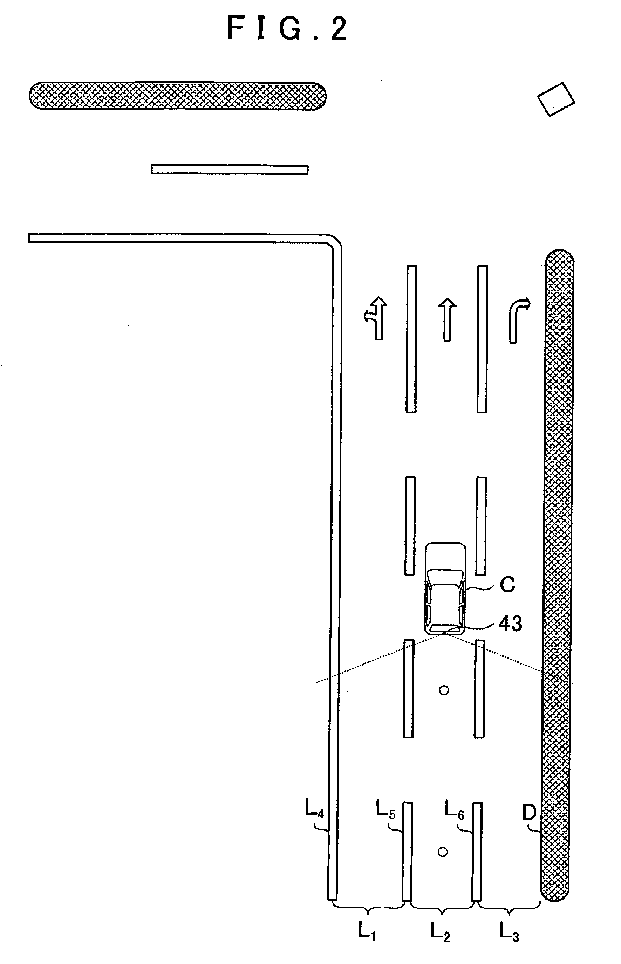

The camera 43 photographs an image of the vicinity of the host vehicle and outputs image information that includes the road along which the host vehicle is traveling. The control unit 20 acquires this signal via an interface (not illustrated), and thereby acquires image information of an image that includes the road along which the vehicle is traveling. FIG. 2 is a drawing that shows the state in which a host vehicle C, which is traveling along the road, is viewed from above, and as shown in the present embodiment, the camera 43 is a rear-view camera that is installed on the back portion of the host vehicle C. The field of view of this camera 43 is the road surface in back of the host vehicle C, which is shown by the broken lines. Note that provided that the camera 43 can photograph an image that includes the road on which the host vehicle is traveling, the camera 43 may be a front camera that can photograph the road surface in front of the host vehicle, or a camera that photographs the road surface at the side of the host vehicle.

In the present embodiment, the navigation apparatus 10 is made to function as the road information generating apparatus according to the present invention by the navigation program 21 carrying out the registration process for lane information. Thus, the navigation program 21 is provided with a host vehicle position information acquiring unit 21a, an image information acquiring unit 201 b, a host vehicle travel lane detecting unit 21 c, and a lane information registering unit 21d. In addition, a guidance process unit 21e is provided in order to execute the guidance that uses this lane information.

In addition, map information 30a for executing the guidance by the navigation program 21 is stored on the storage medium 30. The map information 30a includes, for example, node data that indicates the nodes that are set on the road and contour interpolation point data for specifying the shape of a road between nodes, link data that indicates the links between nodes and contour interpolation points, and data that indicates landmarks. The map information 30a is used in the specification of the current position of the host vehicle, guidance to a destination point, and compensating the host vehicle position (map matching) based on the travel path of the host vehicle.

In the present embodiment, the node data and the contour interpolation point data include data that indicates the position on the road, and the node data and the contour interpolation point data are generated for each of the lanes and registered. Furthermore, in the present embodiment, each of the nodes and each of the contour interpolation points are structured such that the relationships between each of the lanes can be grasped. For example, for each node and each contour interpolation point, a structure can be used in which the number of lanes in each road is associated with information that indicates that a lane is the nth lane (where n is a natural number) when counting from the left side toward the right side of the road. Note that the node data and the contour interpolation point data in the present embodiment are included in the map information 30a, but because they are sets of information that are associated with a lane, they are also referred to as lane information 30b.

The host vehicle position information acquiring unit 21 a is a module that acquires the host vehicle position information, which indicates the position of the host vehicle. It acquires the output signals of the GPS receiving unit 40, the vehicle speed sensor 41, and the gyroscopic sensor 42, and detects the longitude and latitude of the current position of the host vehicle, and the result is used as the host vehicle position information. The image information acquiring unit 21b is a module that acquires the image information that is output by the camera 43, and the acquired image information is received by the host vehicle travel lane detecting unit 21 c.

The host vehicle travel lane detecting unit 21c is a module that detects the host vehicle travel lane along which the host vehicle is traveling based on the image information. In the present embodiment, it extracts the image of the boundaries of the lanes. Specifically, on a road, features that correspond to the boundaries of the lanes (for example, road markings and structures) are present, and thus it is possible to specify the lane based on the image information if the image of this feature is extracted and then a characteristic quantity that corresponds to the boundaries of the lanes is extracted. Thus, the host vehicle travel lane detecting unit 21c detects the host vehicle travel lane by specifying the relationships between the host vehicle C and each of the lanes based on the position of the camera 43 and each of the lanes in the image.

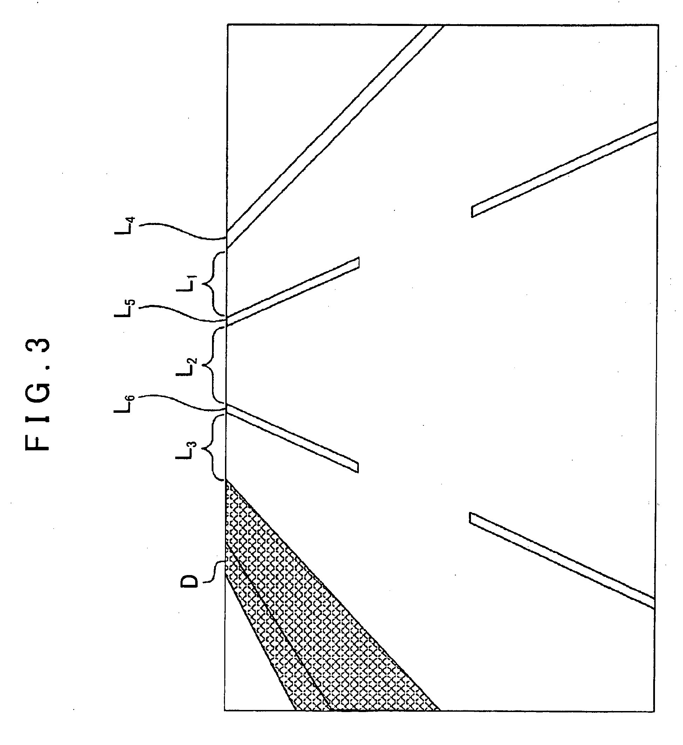

For example, the boundaries of lanes L₁, L₂, and L₃ in the road that is shown in FIG. 2 are structured by white lines L₄, L₅, and L₆, which are road markings, and a center divider D, which is a structure. When this road is photographed by the camera 43 of the host vehicle C, an image such as that shown in FIG. 3 is obtained. Because the white lines L₄, L₅, and L₆, and the center divider D extend along the road, in the image that is shown in FIG. 3, an image that shows the white lines L₄, L₅, and L₆, and the center divider D is extracted, and if the edges thereof are specified, it is possible to treat these edges as the boundaries of the lanes. Note that the extraction of the image that shows the white lines L₄, L₅, and L₆ and the center divider D, and the specification of the edges can use well-known methods (for example, pattern matching and edge extraction, and Hough transform and the like).

Furthermore, the installation position of the camera 43 in the host vehicle C is a position that has been determined in advance, and thus it is possible to associate figures at each of the positions in the image that has been photographed by the camera 43 and the actual position of the feature that is present in the vicinity of the host vehicle C. For example, it is possible to specify that a portion that is present at the center of the image is a feature that is present in the vicinity of the center of the host vehicle, and a portion that is present on the right side of the image is a feature that is present on the left rear side of the host vehicle. Furthermore, in the example that is shown in FIG. 3, it can be specified that the figure of the center divider D is present on the right rear side of the host vehicle and that the white line L₄, which is continuous, is present on the left rear side of the host vehicle C. Thus, based on the image that is shown in FIG. 3, it is possible to specify that there are three lanes. Therefore, when the lanes are set to L₁, L₂, and L₃ in order from the left, it is possible to detect that the host vehicle travel lane is L₂.

The lane information registering unit 21 d generates the node data or the contour interpolation point data that shows the position of the host vehicle travel lane that has been specified as explained above based on the host vehicle position information that has been described above, and registers this information on the storage medium 30 as the lane information 30b. Note that in the present embodiment, the lane information 30b is generated by setting the center position of the lane in the transverse direction to the position of a node or a contour interpolation point (which will be explained below in detail). In addition, in the present embodiment, it is possible to grasp the relationships between each of the lanes from the image information as has been described above, and thus the lane information 30b is generated such that these relationships can be understood.

The guidance process unit 21e executes a guidance process by referring to the lane information 30b. Specifically, the host vehicle travel lane and the lanes in the vicinity thereof are identified by acquiring the lane information 30b, and the content of the guidance is specified based on the results of this identification. In addition, data for outputting the content of the guidance is output to the display unit 44 and the speaker 45. The content of the guidance is displayed in the display unit 44 and the content of the guidance is output from the speaker 45. As a result, the driver who is driving the host vehicle C can appropriately carry out driving based on guidance that reflects the differences in the lanes.

### (2) Road information generating process

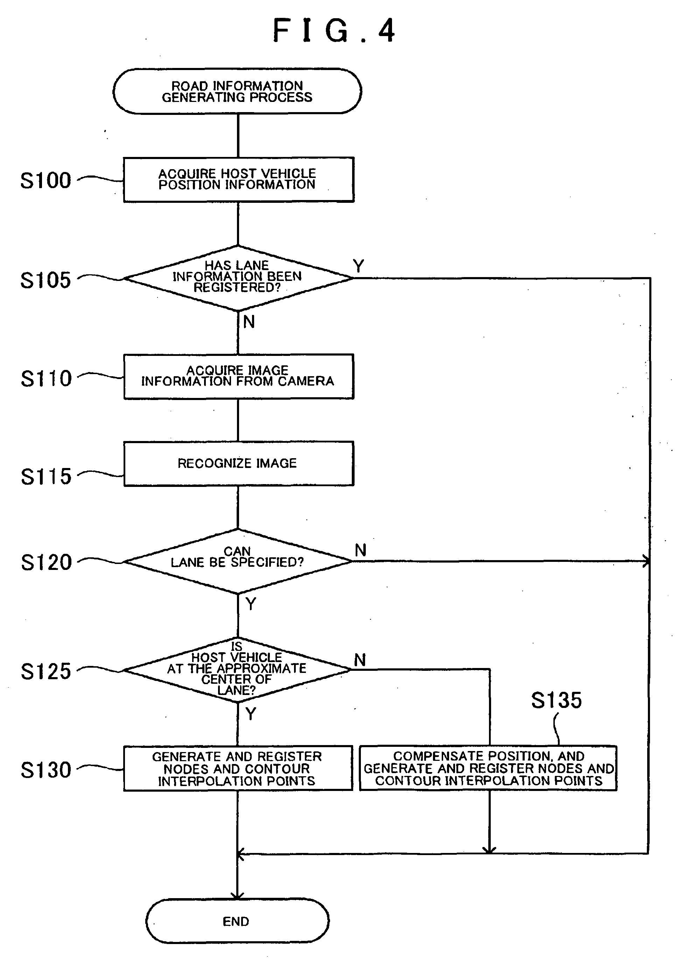

Next, road information generating process that is executed by the navigation apparatus 10 in the above structure will be explained. When the navigation program 21 is executed by the navigation apparatus 10 while the host vehicle is traveling, the road information generating process that is shown in FIG. 4 is repeatedly executed at a constant interval (for example, 100 ms).

In this process, first, the host vehicle information acquiring unit 21a acquires the host vehicle position information by acquiring the output signals of the GPS receiving unit 40, the vehicle speed sensor 41, and the gyroscopic sensor 42 (step S100). Next, the lane information registering unit 21d determines whether or not the lane information of the lane that corresponds to the position of the host vehicle has already been registered (step S105). In the present embodiment, because the map matching process described above is carried out in the navigation program 21, in the case in which the position of the host vehicle which is indicated by the host vehicle position information is not matched in the map matching process, it is determined that the lane information has not yet been registered.

Specifically, map matching is a process that evaluates the host vehicle to be traveling along the road that is indicated by nodes and contour interpolation points when the travel path of the host vehicle conforms to the arrangement of the nodes and the contour interpolation points, and the nodes and contour interpolation points are necessary in order to carry out matching. Thus, in the present embodiment, the case in which there is no matching is evaluated as a case in which the nodes and contour interpolation points have not been registered yet. In addition, in step S105, when it has been determined that the lane information for the lane that corresponds to the position of the host vehicle has been registered, the process skips to step S110 and after because it is not necessary to generate lane information.

In contrast, in step S105, when it has not been determined that the lane information of the lane that corresponds to the position of the host vehicle has been registered, in step S110 and after, a process is carried out in which the lane information is generated and registered on the storage medium 30. In this process, first, the image information acquiring unit 21b acquires image information from the camera 43 (step S110), and the host vehicle travel lane detecting unit 21c carries out image recognition (step S115). Specifically, based on the image information, the host vehicle travel lane detecting unit 21c carries out the process that detects the image of a feature that corresponds to the boundaries of the lanes, and detects the host vehicle travel lane and the other lanes.

Next, the host vehicle travel lane detecting unit 21c determines whether or not the host vehicle travel lane and the other lanes can be specified (step S120). Specifically, in the image recognition, there are cases in which the host vehicle travel lane and the other lanes cannot be specified due to the influence of the weather and other vehicles or the like. In such a case, it is not possible to determine the relationships between the host vehicle travel lane and the other lanes accurately, and thus, when it has not been determined in step S120 that the lane can be specified, the process skips to the process of step S125 and after, and the process that generates lane information is not carried out.

In contrast, when it has been determined in step S120 that the host vehicle travel lane and the other lanes can be specified, the lane information registering unit 21d carries out a process in which the center position of the host vehicle travel lane in the transverse direction is set to the position of the host vehicle travel lane based on the image information. In order to do this, first, it is determined whether or not the vehicle is traveling along the substantial center (including the center) of the host vehicle travel lane in the transverse direction (step S125). Specifically, because the camera 43 is secured to the host vehicle, in the present embodiment, it is possible to specify in advance which position corresponds to a specified position in the image that has been acquired by the camera 43 when viewed from the host vehicle. Therefore, if the host vehicle travel lane is detected based on the image information, it is possible to specify the relationship between the host vehicle travel lane and the host vehicle, and to determine whether or not the host vehicle is traveling along the substantial center of the host vehicle travel lane in the transverse direction.

For example, when the camera 43 is secured to the center of the vehicle in the transverse direction such that the optical axis of the camera 43 faces toward the rear of the vehicle, the center in the left to right direction of the image that has been taken by the camera 43 matches the center of the host vehicle in the transverse direction. The image that is shown in FIG. 3 shows this example, and because the position of the center of the image in the left to right direction matches the center of the host vehicle in the transverse direction, it is possible to specify whether the host vehicle is traveling at the center of the host vehicle travel lane in the transverse direction depending on whether the position of the center in the image in the left to right direction and the center point of two boundaries that surround the position of this center substantially match.

In step S125, when it has been determined that the host vehicle is traveling along the center of the host vehicle travel lane in the transverse direction, the lane information registering unit 21d acquires the host vehicle position information, generates lane information by setting the position of the host vehicle to the position of a node or a contour interpolation point, and registers the lane information on the storage medium 30 (step S130). Specifically, in the present embodiment, because the substantial center position of the lane in the transverse direction should be registered as the position of a node or a contour interpolation point, in the case in which the host vehicle is traveling along the substantial center of the host vehicle travel lane in the transverse direction, the position of the host vehicle is set to the position of the host vehicle travel lane. According to the structure, it is possible to specify the position of the host vehicle travel lane extremely easily.

In step S125, when it has not been determined that the host vehicle is traveling along the center of the host vehicle travel lane in the transverse direction, the lane information registering unit 21d acquires the host vehicle position information, specifies the center position of the lane in the transverse direction by compensating the position that is shown by the host vehicle position information, generates lane information by setting the center position to the position of the node or a contour interpolation point, and registers the lane information on the storage medium 30 (step S135). Specifically, in order to compensate for the deviations of the host vehicle when the host vehicle is not traveling along the center of the host vehicle travel lane in the transverse direction, first, the center position of the host vehicle travel lane between the boundaries is detected based on the image that has been acquired by the camera 43.

In addition, if the center position between the boundaries and the center position of the image in the left to right direction (that is, the center position of the vehicle in the transverse direction) are acquired, it is possible to specify the deviation between the center position of the lane in the transverse direction and the position of the host vehicle based on these center positions. Therefore, if the quantity of the deviation is increased or decreased with respect to the position of the host vehicle (that is, if the position is compensated in the direction parallel to the transverse direction), it is possible to specify the center position of the lane in the transverse direction based on the position of the host vehicle. Thus, when the center position of the lane in the transverse direction is specified, lane information is generated by using this position as the position of a node or a contour interpolation point, and the lane information is registered on the storage medium 30. Note that the white circles that are shown in FIG. 2 indicate the position of a node or a contour interpolation point in the lane information that is generated in step S130 or step S135, and this node or the contour interpolation point is registered at a discreet position that has been determined in advance.

Note that in the above process, the substantial center position of the lane in the transverse direction may be determined in advance as a position in a range in which the position of the host vehicle being can be treated as the center of the lane in the transverse direction. In addition, when generating lane information in steps S130 and S135, as has been explained above, lane information is generated such that the relationships between the host vehicle travel lane and the other lanes can be grasped. Specifically, the lane information registering unit 21d detects the boundaries of the host vehicle travel lane and the other lanes based on the image information, and specifies the arrangement of each lane that is specified based on the boundaries. Next, for a node or a contour interpolation point, the number of lanes in the road is associated with information that indicates that the host vehicle travel lane is the nth (where n is a natural number) lane when counting from the left side to the right side of the road.

As has been described above, in the present embodiment, a road is photographed by the camera 43, and while specifying the appearance of the actual lane, the host vehicle travel lane and the other lanes are detected, and the positions thereof are registered as the positions of nodes or contour interpolation points. Therefore, it is possible to register the position of lanes accurately while clearly determining the relationships between the lanes.

### (3) Guidance process

Next, the guidance process that is carried out by the navigation apparatus 10 in the structure that has been described above will be explained. When the navigation program 21 is executed by the navigation apparatus 10 while the host vehicle is traveling, the guidance process unit 21e repeatedly carries out the guidance process at constant intervals (for example, 100 ms).

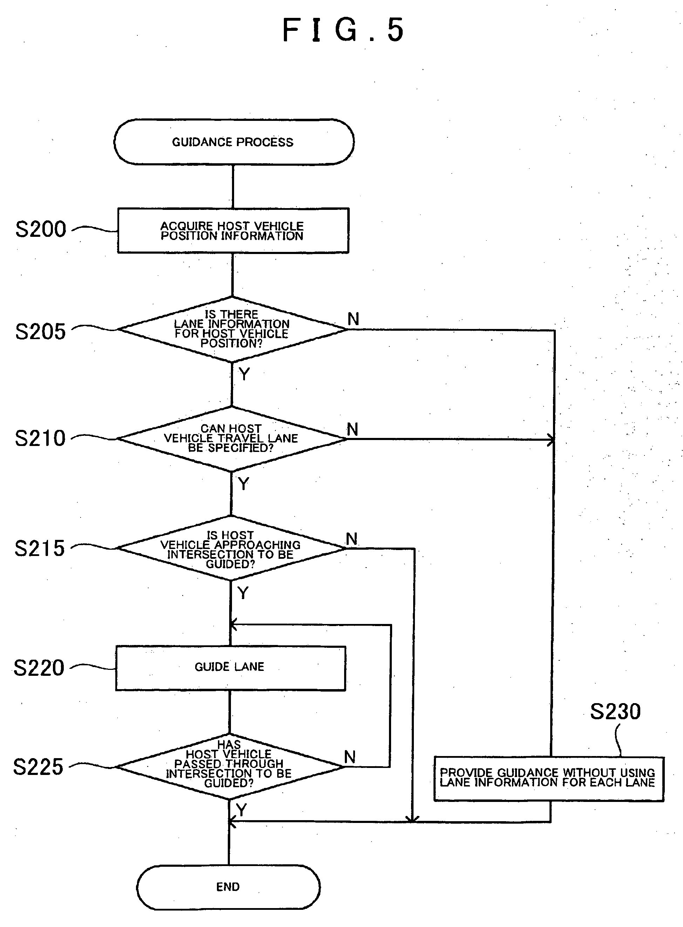

FIG. 5 shows the process when guidance is carried out before an intersection has been reached while the host vehicle is guided along a road that has been set in advance. In this process, first, the guidance process unit 21e acquires the host vehicle position information (step S200). Specifically, the host vehicle position information that has been acquired by the host vehicle position information requiring unit 201a is received, and the position of the host vehicle is specified.

Next, the guidance process unit 21e determines whether or not a lane that corresponds to the position of the host vehicle is present (step S205). Specifically, the lane information 30b is referenced, and it is determined whether or not nodes or contour interpolation points are present that are characterized in that the link for the nodes and the contour interpolation points that are present in the vicinity of the position of the host vehicle substantially match the position of the host vehicle. In step S205, if it is not determined that a lane that corresponds to the position of the host vehicle is present, a guidance process is carried out without using the lane information that indicates the nodes or the contour interpolation points for each lane (step S230).

Specifically, even in a state in which the process that is shown in FIG. 4 is not carried out, the map information 30a is registered in a state in which the lanes are not distinguished in the information that indicates the nodes and the contour interpolation points in each of the roads. Thus, guidance is carried out based on nodes and contour interpolation points for which the lanes are not distinguished.

In contrast, in step S205, when it has been determined that there is a lane that corresponds to the position of the host vehicle, it is determined whether or not it is possible to specify the host vehicle travel lane along which the host vehicle is traveling based on the host vehicle position information (step S210). Here as well, in the matching process that has been described above, it is determined whether or not the arrangement of the nodes and contour interpolation points that have been registered in the lane information 30b and the travel path of the host vehicle conform, and the case in which they conform is evaluated as the case in which it is possible to specify the host vehicle travel lane along which the host vehicle is traveling. In step S210, if it is not determined that it is possible to specify the host vehicle travel lane, a guidance process is carried out in which the lane information that indicates the nodes and contour interpolation points of each of the lanes is not used (step S230).

When it has been determined in step S210 that it is possible to specify the host vehicle travel lane along which the host vehicle is traveling, it is further determined whether or not the host vehicle is approaching an intersection that is the object of guidance (step S215). Specifically, the guidance process unit 21e refers to the host vehicle position information and the map information 30a, acquires the position of the intersection based on the node of the intersection that is the object of guidance, and based on the position of the intersection and the position of the host vehicle, determines whether or not the distance between the intersection and the host vehicle is equal to or less than a predetermined distance (for example, several hundred meters). When it has not been determined in step S215 that the host vehicle is approaching the intersection that is the object of guidance, it is not necessary to carry out guidance for the intersection at this point in time, and thus, step S220 and step S225 are skipped.

When it has been determined in step S215 that the host vehicle is approaching an intersection that is the object of guidance, the guidance process unit 21e carries out lane guidance (step S220). Specifically, because a planned route for the host vehicle at the intersection that is the object of guidance is specified, at the intersection that is the object of guidance, it is possible to specify whether it is planned that the vehicle will either execute a right or left turn or travel forward. Thus, in order to carry out guidance such that the host vehicle moves to a lane that is advantageous for executing either a left or right turn or traveling forward, the guidance process unit 21e outputs control information for carrying out guidance to the display unit 44 and the speaker 45. As a result, it is possible for the host vehicle to move to a lane that is advantageous for executing either a right or left turn or traveling forward at the intersection, and it is possible to carry out the desired operation easily at the intersection. Note that when it is determined in step S225 that the host vehicle has passed through the intersection that is the object of guidance, the guidance process unit 21e ends the above guidance process.

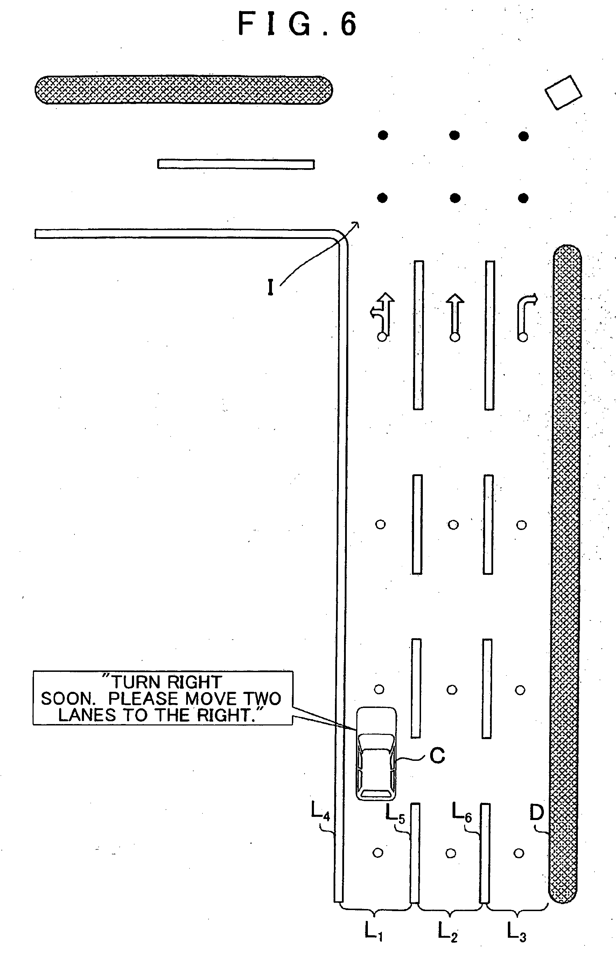

FIG. 6 shows a road that is similar to the road that is shown in FIG. 2, and below, an operating example of a case in which the host vehicle should make a right turn at an intersection I on this road will be explained. In FIG. 6, the contour interpolation points are indicated by white circles and the nodes are indicated by black circles, and a state is assumed in which the lane information that indicates the nodes and the contour interpolation points related to the lanes L₁, L₂, and L₃ of the road along which the host vehicle C is traveling have been registered on the storage medium 30.

In this state, when the guidance process unit 21e carries out route guidance, because the nodes and the contour interpolation points conform to the path of the host vehicle, in the process that is shown in FIG. 5, after passing through step S200 to step S205, it is determined that a lane that corresponds to the position of the host vehicle is present, and in step S210, it is determined that it is possible to specify the host vehicle travel lane. In addition, in step S215, it is determined that the host vehicle C is approaching the intersection I.

Therefore, in step S220, lane guidance is carried out based on the lane information for the host vehicle travel lane. In the example that is shown in FIG. 6, the host vehicle C is traveling along the leftmost lane L₁, and it is necessary for the host vehicle to travel along the rightmost lane L₃ in order to make a right turn at the intersection I. Thus, in the guidance of step S220, in order to carry out guidance such that the host vehicle C will be traveling along the lane L₃ before entering the intersection I, a control signal for outputting, for example, the audio: "Turn right soon. Please move two lanes to the right." is output to the speaker 45. As a result, the driver can recognize that it is necessary to change lanes twice in order to travel according to the travel plan, and it is possible to carry out the lane changes such that preparations can easily be carried out before the host vehicle enters the intersection I.

### (4) Alternative embodiments

The above embodiment is one example for implementing the present invention, and provided that it is possible to detect the host vehicle travel lane based on image information and that it is possible to generate lane information that indicates the position thereof, various alternative embodiments can be used. For example, in addition to a structure in which the host vehicle position information uses all of the GPS receiving unit 40, the vehicle speed sensor 41, and the gyroscopic sensor 42, the host vehicle position information may also be structured so as to use only a portion of these, or the host vehicle position information may also be acquired based on image information that has been acquired by a camera. In addition, it is possible to use a structure in which the host vehicle position information is acquired by inter-vehicle communication or road-to-vehicle communication or the like.

Furthermore, in addition to a structure in which the host vehicle travel lane is detected based on an image that has been photographed by a camera that is mounted on the host vehicle, a structure may also be used in which the host vehicle travel lane is acquired by photographing the vicinity of the host vehicle by using a camera or the like that is mounted in the road surface. Furthermore, when detecting the lane based on image information, provided that it is possible to detect the host vehicle travel lane along which the host vehicle is traveling from among a plurality of or a single lane based on image information, the lane may also be detected by using the road shoulder, road markings in the lane and structures and the like, in addition to the lines that indicate the boundaries of the lanes and center divider.

Furthermore, when registering the position of the lane as lane information, registering the center position of the lane in the transverse direction is preferable because the results can be directly used in map matching or the like. However, in terms of specifying a lane, it is also possible to register a position besides the center position of the lane in the transverse direction as the position of the lane. For example, the position of the host vehicle travel lane may also be specified by a reference position in the lane (for example, an endpoint in the lane in the transverse direction).

Furthermore, the mode of the use of the lane information in which the position of each lane has been registered is not limited to the guidance that has been described above. For example, if the lane along which the host vehicle was traveling is specified by map matching or the like, it is possible to specify accurately the lane along which the host vehicle is traveling. If the position along which the vehicle is traveling in the lane is specified accurately, it is possible to carry out accurate guidance based on the position of the host vehicle. In addition, even for a host vehicle that is traveling along the same road, it is possible to carry out guidance that differs for each lane, and it is possible to provide guidance about traffic congestion information that differs for each lane.

Furthermore, by setting contour interpolation points for each lane, it is possible to carry out vehicle control according to a curve contour that differs for each lane. For example, in a structure in which the direction of the optical axis of the headlights of the host vehicle changes depending on the curve contour, it is possible to use a structure in which the direction of the optical axis is changed by an angle that differs for each lane depending on the radius of curvature of a curve that differs for each lane.

Furthermore, the mode of information that indicates the relationships between the host vehicle travel lane and the other lanes, which is registered in the lane information, is only required to be structured to be able to specify the direction of another lane when viewed from the host vehicle travel lane based on at least this information. Therefore, for example, when the position of the host vehicle travel lane is registered, a structure can be used that specifies the presence or absence of another lane on the left or right of the host vehicle travel lane, that specifies the order of the host vehicle travel lane (for example, information that indicates which number the lane is when counted from the leftmost lane), and specifies the relative position (left lane, center lane, right lane, or the like) at which the host vehicle travel lane is present. Of course, the lane information is generated as information that indicates the relationships between the host vehicle travel lane and the other lanes when the lane information is generated, but at the stage that uses the lane information, the lane information is only required to be able to specify the relationships between the lanes irrespective of whether or not a lane is the host vehicle travel lane.

Furthermore, as a structure for determining whether or not lane information for a lane that corresponds to the position of the host vehicle has been registered is not limited to a determination based on the success or failure of the matching process. Specifically, here, in the case in which the lane information for the host vehicle travel lane is not registered yet on the storage medium, provided that the lane information for the host vehicle travel lane can be generated and registered, a structure may be used in which it is determined whether or not the lane information for vicinity of the host vehicle position has been registered. In such a structure, it is possible to save resources because there is no excess registering of the same information and redundant execution of processes that generate the same lane information.

Note that the registering of lane information for a certain lane may be completed at the point in time at which lane information is generated one time for each lane, or may be completed after being generated a plurality of times. Specifically, it is possible to use a structure in which lane information for a certain lane is generated a plurality of times, lane information is determined by acquiring and registering statistical values (mean values or the like) for this information, and registered. According to this structure, it is possible to generate and register more accurate lane information.

## Claims

1. A road information generating apparatus, comprising:
a host vehicle position information acquiring unit (21a) adapted to acquire host vehicle position information that indicates a position of a host vehicle (c);
an image information acquiring unit (21b) adapted to acquire image information that includes a road along which the host vehicle (c) is traveling, the image information acquiring unit (21b) comprising a camera (43) mounted on the host vehicle (c); and
a host vehicle travel lane detecting unit (21c) adapted to detect a host vehicle travel lane along which the host vehicle (c) is traveling and other vehicle travel lanes by extracting an image of a boundary of the lanes from the image information, **characterized in that** detecting the host travel lane comprises determining a position of the host travel lane relative to the other vehicle travel lanes in terms of a number of the host vehicle travel lane, and determining whether or not the host vehicle lane and the other lanes can be specified; the road information generating apparatus further comprising
a lane information registering unit (21d) adapted to determine, responsive to a determination that the host vehicle travel lane and the other lanes can be specified, whether or not the host vehicle is travelling along substantially the transverse center of the host vehicle travel lane, and,
when it has been determined that the host vehicle is travelling along the transverse center of the host vehicle travel lane
to acquire the host vehicle position information,
to generate lane information (30b) by setting the position of the host vehicle to a node or a contour interpolation point, and
to register the generated lane information (30b) on a storage medium (30), and,
when it has been determined that the host vehicle is not travelling along the transverse center of the host vehicle travel lane to acquire the host vehicle position information,
to specify the transverse center position of the lane by compensating for that position that is given by the host vehicle position information,
to generate lane information (30b) by setting the center position to the position of a node or a contour interpolation point, and
to register the generated lane information (30b) on the storage medium (30),
wherein the lane information (30b) indicates the position of the host vehicle travel lane relative to the other vehicle travel lanes in terms of a number of the host vehicle lane.

2. The apparatus according to claim 1, wherein the number of the host vehicle travel lane is counted from the leftmost lane.

3. A road information generating method, comprising the steps of:
acquiring (S100) host vehicle position information that indicates a position of a host vehicle (c);
acquiring (S110) from a camera (43) mounted on the host vehicle (c), image information that includes a road along which the host vehicle (c) is traveling;
detecting (S115) a host vehicle travel lane along which the host vehicle (c) is traveling and other vehicle travel lanes by extracting an image of a boundary of the lanes from the image information, **characterized in that** detecting the host travel lane comprises determining a position of the host travel lane relative to the other vehicle travel lanes in terms of a number of the host vehicle travel lane; further comprising the steps of
determining (S120), whether or not the host vehicle travel lane and the other lanes can be specified;
determining (S125), responsive to a determination that the host vehicle travel lane and the other lanes can be specified, whether or not the host vehicle is travelling along substantially the transverse center of the host vehicle travel lane, and,
when it has been determined (S125; Yes) that the host vehicle is travelling along the transverse center of the host vehicle travel lane,
acquiring the host vehicle position information,
generating (S130) lane information (30b) by setting the position of the host vehicle to a node or a contour interpolation point, and
registering (S130) the generated lane information (30b) on a storage medium (30), and,
when it has been determined (S125;No) that the host vehicle is not travelling along the transverse center of the host vehicle travel lane,
acquiring the host vehicle position information,
specifying (S135) the transverse center position of the lane by compensating for the position that is given by the host vehicle position information,
generating (S135) lane information (30b) by setting the center position to the position of a node or a contour interpolation point, and
registering (S135) the generated lane information (30b) on the storage medium (30),
wherein the generated lane information (30b) indicates the position of the host vehicle travel lane, relative to the other vehicle travel lanes in terms of a number of the host vehicle lane;
generating, in a navigation unit, guidance information utilizing the generated lane information; and
outputting the guidance information to a driver of the host vehicle by display of the guidance information on a display unit.

4. A navigation apparatus (10) comprising:
the road information generating apparatus of claims 1 or 2;
a guidance processing unit (21e) for generating guidance information utilizing the generated lane information; and
a display unit (44) for outputting the guidance information to a driver of the host vehicle by display of the guidance information on the display unit.

5. A computer program for causing, when run on a computer-implemented navigation apparatus, said apparatus to perform the steps of the method according to claim 3.

6. A computer-readable medium comprising the program of claim 5.

## Patentansprüche

1. Straßeninformationserzeugungsvorrichtung mit:
einer Hostfahrzeugpositionsinformationsbezugseinheit (21a), die dazu angepasst ist, Hostfahrzeugpositionsinformation zu beziehen, die eine Position eines Hostfahrzeugs (c) anzeigt;
einer Bildinformationsbezugseinheit (21 b), die dazu angepasst ist, Bildinformation, die eine Straße aufweist, entlang derer das Hostfahrzeug (c) fährt, zu beziehen, und die eine Kamera (43) aufweist, die an dem Hostfahrzeug (c) montiert ist; und
einer Hostfahrzeugfahrspurerfassungseinheit (21c), die dazu angepasst ist, eine Hostfahrzeugfahrspur, entlang derer das Hostfahrzeug (c) fährt, und andere Fahrzeugfahrspuren durch Extrahieren eines Bildes einer Begrenzung der Spuren aus der Bildinformation zu erfassen, **dadurch gekennzeichnet, dass** Erfassen der Hostfahrspur Bestimmen einer Position der Hostfahrspur relativ zu den anderen Fahrzeugfahrspuren in Form einer Nummer der Hostfahrzeugfahrspur und Bestimmen, ob die Hostfahrzeugspur und die anderen Spuren angegeben werden können oder nicht, aufweist;
ferner mit einer Spurinformationsregistrierungseinheit (21 d), die dazu angepasst ist, als Reaktion auf eine Bestimmung, dass die Hostfahrzeugfahrspur und die anderen Spuren angegeben werden können, zu bestimmen, ob das Hostfahrzeug im Wesentlichen entlang der transversalen Mitte der Hostfahrzeugfahrspur fährt oder nicht, und,
wenn bestimmt worden ist, dass das Hostfahrzeug entlang der transversalen Mitte der Hostfahrzeugfahrspur fährt,
die Hostfahrzeugpositionsinformation zu beziehen,
Spurinformation (30b) durch Festlegen der Position des Hostfahrzeugs auf einen Knoten oder einen Umrissinterpolationspunkt zu erzeugen, und
die erzeugte Spurinformation (30b) auf einem Speichermedium (30) zu registrieren, und,
wenn bestimmt worden ist, dass das Hostfahrzeug nicht entlang der transversalen Mitte der Hostfahrzeugfahrspur fährt, die Hostfahrzeugpositionsinformation zu beziehen,
die transversale Mittelposition der Spur durch Kompensieren jener Position anzugeben, die durch die Hostfahrzeugpositionsinformation gegeben ist,
Spurinformation (30b) durch Festlegen der Mittelposition auf die Position eines Knotens oder eines Umrissinterpolationspunkts zu erzeugen, und
die erzeugte Spurinformation (30b) auf dem Speichermedium (30) zu registrieren,
bei der die Spurinformation (30b) die Position der Hostfahrzeugfahrspur relativ zu den anderen Fahrzeugfahrspuren in Form einer Nummer der Hostfahrzeugspur anzeigt.

2. Vorrichtung nach Anspruch 1, bei der die Nummer der Hostfahrzeugfahrspur von der am weitesten links liegenden Spur gezählt wird.

3. Straßeninformationserzeugungsverfahren mit den Schritten des:
Beziehens (S 100) von Hostfahrzeugpositionsinformation, die eine Position eines Hostfahrzeugs (c) anzeigt;
Beziehens (S 110) von Bildinformation, die eine Straße, entlang derer das Hostfahrzeug (c) fährt, aufweist, von einer Kamera (43), die auf dem Hostfahrzeug (c) montiert ist;
Erfassens (S 115) einer Hostfahrzeugfahrspur, entlang derer das Hostfahrzeug (c) fährt, und anderer Fahrzeugfahrspuren durch Extrahieren eines Bildes einer Begrenzung der Spuren aus der Bildinformation, **dadurch gekennzeichnet, dass** Erfassen der Hostfahrspur Bestimmen einer Position der Hostfahrspur relativ zu den anderen Fahrzeugfahrspuren in Form einer Nummer der Hostfahrzeugfahrspur aufweist; ferner mit den Schritten des
Bestimmens (S 120), ob die Hostfahrzeugfahrspur und die anderen Spuren angegeben werden können oder nicht;
Bestimmens (S 125) als Reaktion auf eine Bestimmung, dass die Hostfahrzeugfahrspur und die anderen Spuren angegeben werden können, ob das Hostfahrzeug im Wesentlichen entlang der transversalen Mitte der Hostfahrzeugfahrspur fährt oder nicht, und,
wenn bestimmt worden ist (S 125; Ja), dass das Hostfahrzeug entlang der transversalen Mitte der Hostfahrzeugfahrspur fährt,
Beziehens der Hostfahrzeugpositionsinformation,
Erzeugens (S 130) von Spurinformation (30b) durch Festlegen der Position des Hostfahrzeugs auf einen Knoten oder einen Umrissinterpolationspunkt, und
Registrierens (S130) der erzeugten Spurinformation (30b) auf einem Speichermedium (30), und,
wenn bestimmt worden ist (S 125; Nein), dass das Hostfahrzeug nicht entlang der transversalen Mitte der Hostfahrzeugfahrspur fährt,
Beziehens der Hostfahrzeugpositionsinformation,
Angebens (S135) der transversalen Mittelposition der Spur durch Kompensieren der Position, die durch die Hostfahrzeugpositionsinformation gegeben ist,
Erzeugens (S135) von Spurinformation (30b) durch Festlegen der Mittelposition auf die Position eines Knotens oder eines Umrissinterpolationspunkts, und
Registrierens (S135) der erzeugten Spurinformation (30b) auf dem Speichermedium (30),
wobei die erzeugte Spurinformation (30b) die Position der Hostfahrzeugfahrspur relativ zu den anderen Fahrzeugfahrspuren in Form einer Nummer der Hostfahrzeugspur anzeigt;
Erzeugens von Führungsinformation in einer Navigationseinheit unter Verwendung der erzeugten Spurinformation; und
Ausgebens der Führungsinformation an einen Fahrer des Hostfahrzeugs durch Anzeigen der Führungsinformation auf einer Displayeinheit.

4. Navigationsvorrichtung (10) mit:
der Straßeninformationserzeugungsvorrichtung des Anspruchs 1 oder 2;
einer Führungsverarbeitungseinheit (21 e) zum Erzeugen von Führungsinformation unter Verwendung der erzeugten Spurinformation; und
einer Anzeigeeinheit (44) zum Ausgeben der Führungsinformation an einen Fahrer des Hostfahrzeugs durch Anzeige der Führungsinformation auf der Anzeigeeinheit.

5. Computerprogramm zum Veranlassen, wenn es in einer computerimplementierten Navigationsvorrichtung ausgeführt wird, besagter Vorrichtung, die Schritte des Verfahrens nach Anspruch 3 durchzuführen.

6. Computerlesbares Medium mit dem Programm von Anspruch 5.

## Revendications

1. Appareil générant de l'information de route, comprenant:
une unité (21a) d'acquisition d'information de position de véhicule hôte adaptée pour acquérir une information de position de véhicule hôte qui indique une position d'un véhicule (c) hôte;
une unité (21b) d'acquisition d'information d'image adaptée pour acquérir une information d'image qui inclut une route sur laquelle le véhicule (c) hôte voyage, l'unité (21 b) d'acquisition d'information d'image comprenant une caméra (43) montée sur le véhicule (c) hôte; et
une unité (21 c) détectant une voie de voyage du véhicule hôte adaptée pour détecter une voie de voyage du véhicule hôte sur laquelle le véhicule (c) hôte voyage et d'autres voies de voyage de véhicule en extrayant une image d'un contour des voies de l'information d'image,
**caractérisé en ce que**
la détection de la voie de voyage de l'hôte comprend une détermination d'une position de la voie de voyage de l'hôte par rapport aux autres voies de voyage de véhicule en termes d'un nombre de la voie de voyage du véhicule hôte, et une détermination si oui ou non la voie du véhicule hôte et les autres voies peuvent être spécifiées, l'appareil générant de l'information de route comprenant en outre
une unité (21d) d'enregistrement d'information de voie adaptée pour déterminer, en réponse à une détermination que la voie de voyage du véhicule hôte et les autres voies peuvent être spécifiées, si oui ou non le véhicule hôte voyage substantiellement sur le centre transverse de la voie de voyage du véhicule hôte, et,
quand il a été déterminé que le véhicule hôte voyage sur le centre transverse de la voie de voyage du véhicule hôte,
pour acquérir l'information de position du véhicule hôte,
pour générer une information (30b) de voie en fixant la position du véhicule hôte à un noeud ou un point d'interpolation de contour, et
pour enregistrer l'information (30b) de voie générée sur un support (30) de stockage, et
quand il a été déterminé que le véhicule hôte ne voyage pas sur le centre transverse de la voie de voyage du véhicule hôte pour acquérir l'information de position du véhicule hôte,
pour spécifier la position du centre transverse de la voie en compensant pour cette position qui est donnée par l'information de position du véhicule hôte,
pour générer une information (30b) de voie en fixant la position de centre à la position d'un noeud ou un point d'interpolation de contour, et
pour enregistrer l'information (30b) de voie générée sur le support (30) de stockage,
où l'information (30b) de voie indique la position de la voie de voyage du véhicule hôte par rapport à d'autres voies de voyage de véhicule en termes d'un nombre de la voie de véhicule hôte.

2. Appareil selon la revendication 1, dans lequel le nombre de la voie de voyage du véhicule hôte est compté à partir de la voie la plus à gauche.

3. Méthode générant de l'information de route, comprenant les étapes de:
acquérir (S100) une information de position de véhicule hôte qui indique une position d'un véhicule (c) hôte;
acquérir (S110) à partir d'une caméra (43) montée sur le véhicule (c) hôte, une information d'image qui inclut une route sur laquelle le véhicule (c) hôte voyage;
détecter (S115) une voie de voyage du véhicule hôte sur laquelle le véhicule (c) hôte voyage et d'autres voies de voyage de véhicule en extrayant une image d'un contour des voies de l'information d'image,
**caractérisée en ce que**
détecter la voie de voyage de l'hôte comprend déterminer une position de la voie de voyage de l'hôte par rapport aux autres voies de voyage de véhicule en termes d'un nombre de la voie de voyage du véhicule hôte;
comprenant en outres les étapes de
déterminer (S120) si oui ou non la voie de voyage du véhicule hôte et les autres voies peuvent être spécifiées;
déterminer (S125), en réponse à une détermination que la voie de voyage du véhicule hôte et les autres voies peuvent être spécifiées, si oui ou non le véhicule hôte voyage substantiellement sur le centre transverse de la voie de voyage du véhicule hôte, et
s'il a été déterminé (S125; oui) que le véhicule hôte voyage sur le centre transverse de la voie de voyage du véhicule hôte,
acquérir l'information de position du véhicule hôte,
générer (S130) une information (30b) de voie en fixant la position du véhicule hôte à un noeud ou un point d'interpolation de contour, et enregistrer (S130) l'information (30b) de voie générée sur un support (30) de stockage, et
quand il a été déterminé (S125, non) que le véhicule hôte ne voyage pas sur le centre transverse de la voie de voyage de véhicule hôte,
acquérir l'information de position du véhicule hôte,
spécifier (S135) la position de centre transverse de la voie en compensant pour la position qui est donnée par l'information de position du véhicule hôte,
générer (S135) une information (30b) de voie en fixant la position de centre à la position d'un noeud ou d'un point d'interpolation de contour, et
enregistrer (S135) l'information (30b) de voie générée sur le support (30) de stockage,
où l'information (30b) de voie générée indique la position de la voie de voyage du véhicule hôte, par rapport à d'autres voies de voyage de véhicule en termes d'un nombre de la voie de véhicule hôte;
générér, dans une unité de navigation, une information de guidage utilisant l'information de voie générée; et
fournir l'information de guidage à un conducteur du véhicule hôte par affichage de l'information de guidage sur une unité d'affichage.

4. Appareil (10) de navigation comprenant:
l'appareil générant de l'information de route selon les revendications 1 ou 2;
une unité (21e) de traitement de guidage pour générer une information de guidage utilisant l'information de voie générée; et
une unité (44) d'affichage pour fournir l'information de guidage à un conducteur du véhicule hôte par affichage de l'information de guidage sur l'unité d'affichage.

5. Programme d'ordinateur pour faire que, quand exécuté sur un appareil de navigation mis en oeuvre par ordinateur, ledit appareil réalise les étapes de la méthode selon la revendication 3.

6. Support lisible par un ordinateur comprenant le programme de la revendication 5.
